# EUROPÄISCHE PATENTSCHRIFT

(11) **EP 0 635 810 B1**
(45) Veröffentlichungstag und Bekanntmachung des Hinweises auf die Patenterteilung: **12.05.1999**
(21) Anmeldenummer: 94110852.4
(22) Anmeldetag: 13.07.1994
(51) Int. Cl.: G08B 13/19

(54) **Infrarotfilterscheibe für passive Infraroteindringdetektoren**
Infrared filter disc for passive infrared intrusion detectors
Disque filtrant les infrarouges pour détecteurs d'intrusion à infrarouges

(30) Priorität: 23.07.1993 CH 2231/93
(43) Veröffentlichungstag der Anmeldung: 25.01.1995
(73) Patentinhaber: Siemens Building Technologies AG, 8708 Männedorf (CH)
(72) Erfinder: Müller, Dr. Kurt Albert, CH-8712 Stäfa (CH); Allemann, Dr. Martin, CH-8340 Hinwil (CH); Lange, René, CH-8634 Hombrechtikon (CH); Wieser, Dieter, CH-8008 Zürich (CH)

(56) Entgegenhaltungen:
- EP-A- 0 440 112
- US-A- 5 183 602
- APPLIED OPTICS, Bd.13, Nr.2, Februar 1974, NEW YORK Seiten 425 - 430 K. ARMSTRONG 'FAR INFRARED FILTERS UTILIZING SMALL PARTICLE SCATTERING AND ANTIREFLECTION COATINGS'

## Beschreibung

Die Erfindung betrifft eine Infrarotfilterscheibe für passive Infaroteindringdetektoren gemäß dem Oberbegriff des Patentanspruchs 1. Solche Infraroteindringdetektoren sind allgemein bekannt. Sie dienen zur Erkennung des Eindringens von Objekten, die Infrarotstrahlung aussenden, in zu überwachende Räume.

Beispielsweise ist in der US-A-3,703,718 ein Infrarot-Eindring-Detektions-System beschrieben, bei dem zwischen einem Sensorelement und einem Spiegel zur Fokussierung von Infrarotstrahlung auf dem Sensorelement ein Filter angeordnet ist, das für elektromagnetische Strahlung im Bereich von 4,5 bis 20 µm (Körperstrahlung von Lebewesen) durchlässig ist.

Zur Fokussierung der Infrarotstrahlung auf das Sensor-Element können sowohl Spiegel als auch Linsen dienen. Insbesondere bei der Verwendung von Spiegeln ist der Innenraum des Gehäuses, in dem der Sensor angeordnet ist, weitgehend gegenüber der Atmosphäre offen. Zum Schutz des Sensors gegenüber Fluktuationen der Umgebungsluft etc. hat es sich als vorteilhaft erwiesen, die Eintrittsöffnung der Infrarot-Strahlung in das Innere des Gehäuses durch ein für Infrarotstrahlung durchlässiges Fenster zu verschließen. Hierfür besonders geeignet ist ein Fenster aus Polyethylen, das sich leicht im Extrusionsverfahren zu Folien oder im Spritzgußverfahren zu Platten verarbeiten läßt. Polyethylen hat den Vorteil, daß es in dem gewünschten Wellenlängenbereich für Infrarotstrahlung weitgehend durchlässig ist. Im Falle der Verwendung von Linsen als Fokussierungsmittel hat Polyethylen den weiteren Vorteil, daß die Linsen in Form von Fresnel-Linsen bei der Herstellung der Folien, bzw. Platten eingeprägt werden können.

Es ist bekannt (A.H.Pfund; Journal of the Optical Society of America, Vol. 24, 143 [1934]), Pulverfilme als Infrarot-Transmissions-Filter zu verwenden, z.B. solche mit Pulvern aus Quarz, Zinkoxid oder Magnesiumoxid. Es wurden Versuche (R.L.Henry; Journal of the Optical Society of America, Vol. 38, No. 9, 775 [1948]) mit verschiedenen Materialien (Quarz- und Zinksulfidpulver) unternommen, wobei die Pulverschichten auf Platten aus Glas oder Steinsalz untersucht wurden. Es wurde festgestellt, daß die Faktoren, die die Filtertransmission bestimmen, die Partikelkonzentration, die Partikelgrößenverteilung und die Brechungsindices von Partikelmaterial und Matrix sind. Ferner sind aus Applied Optics, Vol. 12, No. 9, 2007 ff. (September 1973) und Applied Optics, Vol. 13, No. 2, 425 ff. (September 1973) Streufilter bekannt, bei denen Diamantpulver auf eine Polyethylenfolie aufgestreut ist. Diese Filter dienten zur Herstellung von Filtern, die im fernen Infrarotbereich (33 µm bis 550 µm) durchlässig sein sollten und Strahlung mit kürzerer Wellenlänge reflektieren sollten. Außer in der Astronomie fanden diese Filter keine Anwendung.

An Fenster zum Verschluß von Strahlungseintrittsöffnungen von Infraroteindringdetektoren werden unter anderem folgende Anforderungen gestellt:
a) Sie sollen eine dem Detektor, d.h. der Umgebung angepaßte Färbung aufweisen,
b) sie sollen kurzwelliges Licht mit einer Wellenlänge < 4,0 µm durch Absorption, Reflexion oder Streuung vom Sensor fernhalten und
c) sie sollen Strahlung mit einer Wellenlänge im Bereich von 4 bis 15 µm möglichst ungehindert hindurchlassen.

In der Praxis werden als Fenster für Infraroteindringdetektoren meist Polyethylenfolien verwendet. Die Lichtstreuung erfolgt auf zwei Arten, einmal durch ein (farbiges oder farbloses) Pigment im Polyethylen als Matrix oder durch Mikrokristallite im Polyethylen. Die Mikrokristallite streuen bei geeigneter Dimensionierung kurzwellige Strahlung (sichtbares Licht), die Fenster erscheinen daher weiß; langwellige Strahlung (Infrarotstrahlung im Bereich der Körperstrahlung von Lebewesen) lassen sie nahezu ungehindert durch.

Es sind verschiedene passive Infraroteindringdetektoren im Handel, bei denen die Lichtstreuung in den Eintrittsfenstern durch in die Polyethylenmatrix eingebettete Mikrokristallite erfolgt. Beispiele für Infraroteindringdetektoren mit Fenstern, die mit Weißpigmenten eingefärbt sind, sind z.B. die von der Cerberus AG vertriebenen PIR-Melder IR210 und IR212, deren Eintrittsfenster mit Titandioxid, das an sich farblos ist, aber durch Streuung weiß erscheint, gefärbt sind.

Um die Fehlalarmsicherheit von passiven Infraroteindringdetektoren zu erhöhen, wurde es im Laufe der Zeit immer mehr erforderlich, den, Einfluß von Störlicht zu vermindern. Insbesondere sollen die passiven Infraroteindringdetektoren eine geringe Empfindlichkeit gegenüber Strahlung mit einer Wellenlänge von < 6 µm aufweisen.

Es ist bekannt, daß eine sehr starke Scheinwerferlampe auch bei direkt abgedecktem Sensorfenster noch Alarm auslösen kann. Dies liegt daran, daß durch Erwärmung des Sensorgehäuses und über Wärmeleitung und Sekundärstrahlung eine asymmetrische Erwärmung der differentiell geschalteten Sensorelemente erfolgt. Teilweise Abhilfe kann durch Verpacken des Sensors in einen Mantel aus Kunststoff oder Blech geschaffen werden. Diese Maßnahme genügt aber bei weitem nicht, um einen passiven Infraroteindringdetektor sicher gegen Fehlalarme zu machen, die durch Scheinwerfer, beispielsweise von Autos, ausgelöst werden.

Die unmittelbar auf den Sensoren verwendeten Filter, z.B. mit dünnen Mehrfach-Schichten aus dielektrischem Material überzogene Germanium- oder Siliciumplatten, sind sehr teuer und können mit vernünftigem finanziellen Aufwand nicht so ausgestaltet werden, daß sie den genannten Anforderungen genügen. Beispielsweise weisen die am häufigsten auf Sensoren für PIR-Melder verwendeten Filter im Wellenlängenbereich zwischen 1,6 µm und 2,5 µm noch Resttransmissionspeaks von einigen zehntel Promille auf. Da die verwendeten Sensoren u.a. pyroelektrische, also thermische Sensoren sind, deren Empfindlichkeit von der Wellenlänge unabhängig ist, kann das Licht einer starken Scheinwerferlampe in genügender Reststärke durch das Filter gelangen, um einen Alarm auszulösen.

In der nicht vorveröffentlichten CH-A-684 717 wird vorgeschlagen, die aus dem zu überwachenden Raum in den Infraroteindringdetektor fallende Strahlung von mehreren Spiegelflächen auf die Sensoren fokussieren zu lassen, wobei die fokussierenden Spiegelflächen so angeordnet und gewölbt sind, daß die Strahlung im Bereich von 6 bis 15 µm auf die Sensorelemente fokussiert wird und die fokussierenden Spiegelelemente eine solche Oberflächenrauhigkeit aufweisen, daß Störstrahlung mit einer Wellenlänge von < 3 µm diffus gestreut wird, so daß die auf die Sensoren fallende Störstrahlung im Verhältnis zu der von lebenden Individuen stammende Strahlung erheblich reduziert wird. Für Infraroteindringdetektoren, bei denen die einfallende Strahlung durch Linsen fokussiert wird, ist dieses Verfahren nicht geeignet, da es zusätzliche Bauteile erfordert.

Die durch die Einfärbung der als optische Filter dienenden Polyethylenfolien mit Weißpigmenten, wie z.B. durch kommerziell erhältliches Titandioxid, erzielte Undurchlässigkeit der Fenster für Störlicht ist jedoch noch nicht hinreichend, um den Anforderungen an die Fehlalarmsicherheit von passiven Infraroteindringdetektoren zu genügen. Dazu sind einerseits die Partikeln des erhältlichen Titandioxids zu klein, wodurch ihre Streuwirkung bei zu kleinen Wellenlängen eintritt, andererseits kann Titandioxid wegen seiner breiten Absorptionsbande im Bereich von > 11 µm mit einem ausgesprochenen Maximum bei 15 µm nur in kleinen Konzentrationen verwendet werden. Beispielsweise gibt eine einprozentige Konzentration in Polyethylen bereits eine Abschwächung des Intrusionssignals auf ca. 75 %. Die Abschwächung der Störstrahlung ist bei dieser Konzentration zu gering, um Fehlalarme wirksam zu unterdrücken.

Wird die Lichtstreuung in den Eintrittsfenstern durch die Einbettung von Polyethylenmikrokristalliten in die Polyethylenmatrix erzeugt, so läßt sich durch geeignete Dimensionierung der Mikrokristallite kurzwellige Strahlung in gewünschter Weise streuen (die Fenster erscheinen weiß), wobei langwellige Strahlung nahezu ungehindert durchgelassen wird. Die Methode erscheint elegant, leider ist es aber verfahrenstechnisch nicht leicht, die Teilchengröße und Konzentration der Mikrokristallite den Anforderungen anzupassen. In der Praxis bestehen Fenster dieser Art meist aus zwei Lagen, einer dünnen Schicht aus Polyethylen mit Mikrokristalliten für die Lichtstreuung und einer dicken Schicht aus reinem Polyethylen zur Erzielung der nötigen Stabilität. Ferner sind dicke Polyethylenfolien mit der geforderten Kristallitkonzentration nicht spritzgießbar, da die beim Spritzgießen erforderlichen hohen Temperaturen die Mikrokristallite zum Verschwinden bringen. Es ist daher nicht möglich, nach dieser Methode auf technisch einfache Weise und preiswert geeignete Infrarotfilterscheiben herzustellen.

In der EP-A-0 440 112 wurde eine Infrarotfilterscheibe für Strahlungsdetektoren vorgeschlagen, welche aus einem für Infrarot-Strahlung durchlässigen Kunststoff besteht, der Zinksulfidpartikel mit einer Partikelgröße von 0,5 µm bis 50 µm gleichmäßig darin verteilt, enthält. Die Komgrössenverteilung des Zinksulfids ergibt jedoch, insbesondere bei der Verwendung von höheren Konzentrationen an Zinksulfid, keine scharfe Abgrenzung des Durchlässigkeitsbereichs der Filterscheibe gegenüber Strahlung mit kürzerer Wellenlänge. Angesichts der gestiegenen Anforderungen hinsichtlich der Sicherheit von Infraroteindringdetektoren gegen Störstrahlung erscheint die Verminderung des einfallenden Störlichts noch verbesserungsbedürftig; vor allem im Hinblick darauf, daß die für die Detektion von unbefugten Eindringlingen benutzte Infrarot-strahlung dicht an der Grenze des Durchlässigkeitsbereichs der Filterscheibe liegt.

Von diesem Stand der Technik ausgehend liegt der Erfindung die Aufgabe zugrunde, verbesserte Infrarotfilterscheiben für Infraroteindringdetektoren zu schaffen, die eine verbesserte Undurchlässigkeit für Störlicht im Bereich zwischen 0,4 und 4 µm aufweisen, ohne daß die Durchlässigkeit für Infrarot-Strahlung im gewünschten Bereich von 6 µm bis 15 µm in unzulässiger Weise vermindert wird, und deren Durchlässigkeitsbereich für Strahlung eine scharfe Abgrenzung zwischen erwünschter Strahlung und Störstrahlung aufweist.

Diese Aufgabe wird bei einer Infrarotfilterscheibe der eingangs genannten Art dadurch gelöst, dass die Scheibe aus Polyethylen mit gleichmässig darin verteilten Diamantpartikeln mit einer Partikelgrösse von 0,75 µ bis 1,25 µm besteht.

In der US-A-5,183,602 ist ein als Infrarotfilter geeigneter und Diamantpartikel enthaltender Verbundwerkstoff beschrieben, der aber für Infrarotfilterscheiben nicht verwendet werden kann. Denn während bei den letzteren den Diamantpartikeln eine wesentliche optische Funktion zukommt, dienen bei dem in der US-A-5,183,602 beschriebenen Verbundwerkstoff die Diamantpartikel ausschliesslich zur Verbesserung der mechanischen Stabilität der fragilen Filtermaterialien.

Gemäß einer bevorzugten Ausführungsform enthält die Infrarotfilterscheibe Diamantpartikel in einer Menge von 0,5 bis 5 Gewichtsprozent, vorzugsweise von etwa 1 Gewichtsprozent. Die Teilchengröße der Diamantpartikel ist dabei < 2 µm, vorzugsweise 0,5 bis 1,25 µm.

Gemäß einer weiteren bevorzugten Ausführungsform ist die Infrarotfilterscheibe als dünne, planparallele Platte ausgebildet.

Eine bevorzugte Ausgestaltung der erfindungsgemäßen Infrarotfilterscheibe besteht darin, daß sie als optisches Element ausgebildet ist, das mindestens eine Fresnel-Linse umfaßt.

Eine besonders bevorzugte Ausführungsform einer erfindungsgemäßen Infrarotfilterscheibe besteht darin, daß sie ein Oberflächenrauhigkeit von etwa 1 µm aufweist.

Eine Infrarotfilterscheibe gemäß vorliegender Erfindung wird gemäß folgendem Ausführungsbeispiel hergestellt:

### Beispiel

Eine erfindungsgemäße Infrarotfilterscheibe wird wie folgt erhalten:

1 Gewichtsteil Diamantpulver mit einer Korngröße im Bereich von 0,75 bis 1,25 µm (z.B. von der Firma Struers A/S, Valhøjs Allé 176, Rødovre/København, Danmark erhältlich) wird mit 99 Gewichtsteilen Polyethylengranulat (z.B. Hostalen GB 6450 der Fa. Hoechst AG) in einer Compoundieranlage gemischt und granuliert. Daraus werden im normalen Extrusionsverfahren Polyethylenfenster in einer Dicke von 0,4 mm hergestellt.

Die so erhaltene Infrarotfilterscheibe weist im Bereich von 3 bis 15 µm eine gegenüber bekannten Infrarotfilterscheiben aus Polyethylen mit Einlagerungen von Titandioxid oder Zinksulfid erheblich bessere Transmission auf. Insbesondere ist der Anstieg der Transmission im Bereich von etwa 2 bis 3 µm erheblich steiler.

Das in einem typischen Fremdlichttest, z.B. in dem vom Verband der Sachversicherer in der Bundesrepublik Deutschland vorgeschriebenen Test, gemessene Restsignal schwächt sich durch die Streuwirkung von 1 Gewichtsprozent Diamantpulver in einer 0,4 mm dicken Polyethylenfolie im Vergleich zu einer Pigmentierung mit Titandioxid auf 5 bis 20 Prozent ab, in Abhängigkeit von der Optik des passiven Infrarotdetektors, in dem es gemessen wird.

Abwandlungen der vorstehend beschriebenen Infrarotfilterscheibe sind im Rahmen der Erfindung gemäß den Ansprüchen möglich und dem Fachmann geläufig.

## Patentansprüche

1. Infrarotfilterscheibe für passive Infraroteindringdetektoren, welche ein strahlungsundurchlässiges Gehäuse mit einer Eintrittsöffnung für die Strahlung und ein Sensorelement, das in Abhängigkeit von der Intensität der auftreffenden Strahlung ein elektrisches Signal abgibt, aufweisen, dadurch gekennzeichnet, daß die Scheibe aus Polyethylen mit gleichmässig darin verteilten Diamantpartikeln mit einer Partikelgröße von 0,75 µm bis 1.25 µm besteht.

2. Infrarotfilterscheibe nach Anspruch 1, dadurch gekennzeichnet, daß die Scheibe Diamantpartikel in einer Menge von 0,5 bis 5 Gewichtsprozent, vorzugsweise von etwa 1 Gewichtsprozent, enthält.

3. Infrarotfilterscheibe nach Anspruch 2, dadurch gekennzeichnet, daß die Teilchengrösse der Diamantpartikel < 2 µm, vorzugsweise 0,5 bis 1,25 µm, ist.

4. Infrarotfilterscheibe nach einem der Ansprüche 1 bis 3, dadurch gekennzeichnet, daß die Scheibe als dünne planparallele Platte ausgebildet ist.

5. Infrarotfilterscheibe nach einem der Ansprüche 1 bis 3, dadurch gekennzeichnet, daß die Scheibe als optisches Element ausgebildet ist, das mindestens eine Fresnel-Linse umfaßt.

6. Infrarotfilterscheibe nach einem der Ansprüche 1 bis 5, dadurch gekennzeichnet, daß die Scheibe eine Oberflächenrauhigkeit von etwa 1 µm aufweist.

## Claims

1. Infrared filter disc for passive infrared intrusion detectors which have a radiation-impermeable housing with an entrance port for the radiation and a sensor element which emits an electrical signal as a function of the intensity of the impinging radiation, characterized in that the disc consists of polyethylene with diamond particles with a particle size from 0.75 µm to 1.25 µm evenly distributed therein.

2. Infrared filter disc according to Claim 1, characterized in that the disc contains diamond particles in a quantity of 0.5 to 5 weight percent, preferably of approx. 1 weight percent.

3. Infrared filter disc according to Claim 2, characterized in that the particle size of the diamond particles is < 2 µm, preferably 0.5 to 1.25 µm.

4. Infrared filter disc according to one of Claims 1 to 3, characterized in that the disc is formed as a thin plane-parallel plate.

5. Infrared filter disc according to one of Claims 1 to 3, characterized in that the disc is formed as an optical element which comprises at least one Fresnel lens.

6. Infrared filter disc according to one of Claims 1 to 5, characterized in that the disc has a surface roughness of approx. 1 µm.

## Revendications

1. Disque filtrant les infrarouges pour détecteurs passifs d'intrusion à infrarouges, qui comporte un boîtier transparent au rayonnement et ayant une ouverture d'entrée pour le rayonnement et un élément capteur qui émet un signal électrique en fonction de l'intensité du rayonnement incident, caractérisé en ce que le disque est en polyéthylène au sein duquel sont réparties uniformément des particules de diamant d'une dimension de particule de 0,75 µm à 1,25 µm.

2. Disque filtrant les infrarouges suivant la revendication 1, caractérisé en ce que le disque renferme des particules de diamant en une quantité de 0,5 à 5 % en poids, de préférence de 1 % en poids environ.

3. Disque filtrant les infrarouges suivant la revendication 2, caractérisé en ce que les dimensions des particules de diamant sont inférieures à 2 µm, et de préférence sont comprises entre 0,5 et 1,25 µm.

4. Disque filtrant les infrarouges suivant l'une des revendications 1 à 3, caractérisé en ce que le disque est constitué sous la forme d'une plaque mince à faces planes et parallèles.

5. Disque filtrant les infrarouges suivant l'une des revendications 1 à 3, caractérisé en ce que le disque est sous la forme d'un élément optique qui comprend au moins une lentille de Fresnel.

6. Disque filtrant les infrarouges suivant l'une des revendications 1 à 5, caractérisé en ce que le disque a une rugosité superficielle de 1 µm environ.
